# EUROPEAN PATENT SPECIFICATION

(11) **EP 0 901 079 B1**
(45) Date of publication and mention of the grant of the patent: **15.03.2006**
(21) Application number: 98111297.2
(22) Date of filing: 19.06.1998
(51) Int. Cl.: G06F 13/10

(54) **Emulation and emulated screen history**
Emulation und emulierte Bildschirmgeschichte
Emulation et histoire d'écran émulée

(30) Priority: 02.09.1997 US 57338 P; 02.11.1997 US 942993
(43) Date of publication of application: 10.03.1999
(73) Proprietor: Johnson, R. Brent, Tulsa, Oklahoma 74116 (US)
(72) Inventor: Johnson, R. Brent, Tulsa, Oklahoma 74116 (US)
(74) Representative: Denmark, James

(56) References cited:
- US-A- 4 463 418
- PATENT ABSTRACTS OF JAPAN vol. 95, no. 6, 31 July 1995 & JP 07 084901 A (FUJITSU), 31 March 1995
- PATENT ABSTRACTS OF JAPAN vol. 7, no. 180 (P-215), 9 August 1993 & JP 58 084353 A (FUJITSU), 20 May 1983
- "Personal Computer - Series/1 Console Emulator" IBM TECHNICAL DISCLOSURE BULLETIN., vol. 30, no. 11, April 1988, pages 361-362, XP000045665 NEW YORK US

## Description

### BACKGROUND OF THE INVENTION

### 1. Field of the Invention.

The present invention is directed to a system and a process to emulate screen displays generated from a host central processing unit configured to send system information. In particular, the present invention is directed to a system and a process to trap and save host system information and system information updates with an operator central processing unit replacing a console monitor that, in turn, may also be remotely accessed.

### 2. Prior Art.

Mainframe computer processing systems currently utilize a console, also referred to as a dumb terminal, to display status and other information about the mainframe system, such as errors or critical situations. The system information is sent from the mainframe to the dumb terminal in the form of messages. Log files on the mainframe would record messages from the host mainframe to the console.

It is an operator's job to monitor these messages for problems that may arise. The console terminals may be connected physically by coax cable to the mainframe or, in the case of a mini computer, by twinax cable. Coax cabling is used for connecting a mainframe, such as an IBM or IBM compatible mainframe, to the console. Twinax cable is typically used for a two-prong connection for attaching an IBM AS/400 mini computer to a console.

In the case of existing dumb terminals, there was often a display memory utilized to create a visual display.

In the case of mainframes, a separate console is often used to view hardware configurations, to view operating messages, and to view application software information. In the case of mini computers, typically one console may be used for these various categories.

Because operators are accustomed to working with a dumb console terminal, it is advantageous for any substitution to emulate or imitate the replaced screen and its messages and information.

Accordingly, it is desirable to provide an operator central processing unit to replace the dumb terminal or terminals in displaying system information. The operator central processing unit is capable of displaying an emulated screen for each mainframe connected thereto.

In the past, in an attempt to access mainframe based data or systems from a personal computer operating system, a group of "screen scrapers" have been employed, for example as disclosed in JP 07-084901 or IBM Technical Disclosure Bulletin Vol. 30 No. 11 p. 361-362. These allow a personal computer client system access to mainframe based data or systems. Screen scrapers allow custom client applications to be written that access mainframe system screens directly by mapping client access variables directly to screen row and column positions. These do not store the screen display historical information in a memory for subsequent transmittal in reverse order.

Many times problems are presented on the mainframe or mini computer operating the system that go beyond the operator's ability or training to deal therewith. At that point, it may be necessary to involve technical support staff in resolving the issue or problem. In order to resolve the problem, it may be desirable to determine the events just prior to the time the problem arose.

This support may include remotely located field engineers who connect from a laptop personal computer or other remote device. It is, therefore, desirable to allow remote access and connection to the operator personal computer.

In addition to generating emulated screen information for the operator's use, it is also desirable to make current emulations and a history of captured screen updates available to both the operator and to remote engineers. It is desirable to view exactly what the operator entered prior to an error occurring in the system. With this sequential information, it is possible to diagnose problems.

### SUMMARY OF THE INVENTION

The present invention provides a system and a process to emulate screen histories and replaces a console or dumb terminal having a screen display and keyboard input. A standard cable extends from a mainframe central processing unit and is connected to an adapter card. The adapter card is, in turn, connected to an operator personal computer central processing unit having both a display monitor and a keyboard input. System information from the host central processing unit is, thereby, received at the operator central processing unit. The system information and system updates are stored in a process. Initially, the system information delivered from the host pertaining to a full screen image is compressed and stored in a memory. Thereafter, a plurality of sequential updates to the system information are received at the operator central processing unit and each update is stored sequentially. In the present embodiment, five changes or updates are stored following the initial receipt, compression and storage of the history of a full screen image.

After five updates or changes are received and stored, the process repeats itself again. Thus, the system information pertaining to a full screen image from the host is again compressed and stored in memory. Thereafter, a series of five system information updates are received and stored.

The present invention emulates the replaced dumb terminal for viewing various types of screens.

The operator at the operator central processing unit has the option of viewing both an emulated history screen-by-screen as well as an emulation of screen information at the time.

A field engineer connected via a line to a remote central processing unit may connect with the operator central processing unit. One example would be a laptop computer. Multiple users can access the emulated screen history simultaneously, without interference with each other, and browse the individual screen histories. The remote user is provided with a searchable emulation history in reverse order, with the most recent history transmitted first.

### BRIEF DESCRIPTION OF THE DRAWINGS

Figure 1 is a simplified diagrammatic view of one configuration of the present invention of a system and process to emulate screen displays generated from a host central processing unit configured to send system information;
Figure 2 is a simplified diagrammatic view illustrating the sequential process of storing screen system information; and
Figures 3 through 8 are flow charts illustrating a system and process to emulate screen displays in accordance with the present invention.

### DETAILED DESCRIPTION OF THE PREFERRED EMBODIMENTS

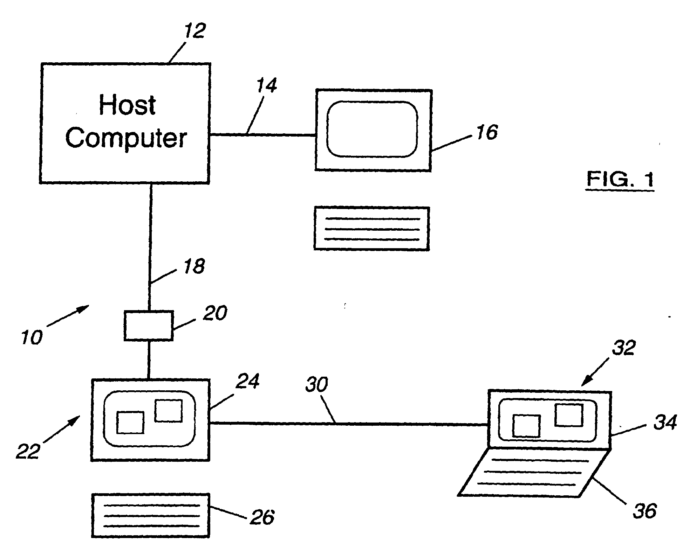

Referring to the drawings in detail, Figure 1 illustrates a simplified diagrammatic view of the present invention of a system and process to emulate screen histories 10. A host computer 12 may be of various configurations, such as an IBM or IBM compatible mainframe central processing unit. The mainframe computer 12 would often be connected by a 3270 coax cable 14 to a console or dumb terminal 16 having both a screen display and a keyboard input. A console hub (not shown) may be interposed between the host mainframe and console terminal to connect a plurality of terminals. The mainframe host is, thus, in communication with the user console. An operator (not shown) would work at the console to monitor messages from the mainframe computer.

The present invention replaces the console 16 that is connected to the mainframe. In the present configuration, a standard 3270 coax cable is connected to an adapter card 20 which is in turn, connected to an operator personal computer (PC) central processing unit 22 having a display monitor 24 and a keyboard 26. The adapter card is a translator in order for the PC to understand mainframe system information. The adapter card provides hardware level attachments between the host controller and the operator CPU. System information from the host is thereby received at the operator central processing unit 22.

System information destined for the console 16 is instead received by the operator CPU. Multiple screens 28 and 29 may be emulated on the operator's CPU 22.

A similar configuration may also be used in the case of a mini computer which would be in the place of the host computer 12. Such a configuration can be used with an AS/400 mini computer connecting to the operator central processing unit by a twinax cable.

The system information as it appears and updates are stored in a particular process at the same time it appears on the screen. Initially, the system information delivered from the host 12 pertaining to a full screen image is compressed and stored in a memory, such as a buffer. Thereafter, a plurality of updates to the system information are received at the operator central processing unit and each update is stored. In this particular embodiment, five changes or updates are stored following the initial receipt, compression and storage of the history of a full screen image.

After the five updates or changes, the process repeats itself again. Thus, the system information pertaining to a full screen image from the host is again compressed and stored. Thereafter, a series of five system information updates are received and stored. All of this information results in buffered data which is resident in memory on the operator central processing unit.

In summary, all of what would have appeared on the screen at the operator's console is saved.

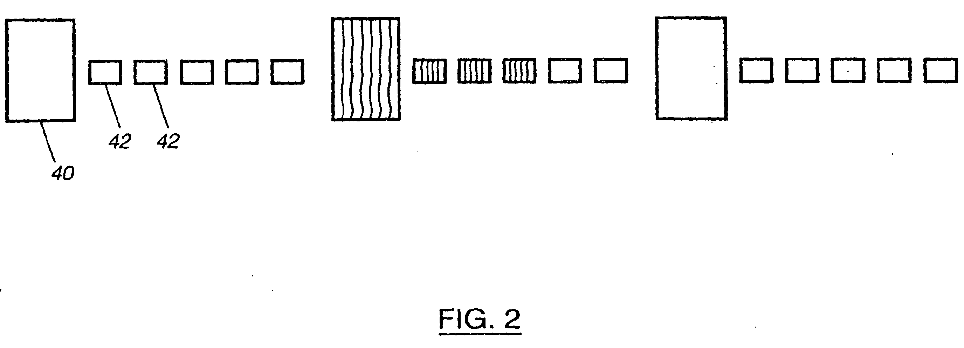

Figure 2 diagrammatically illustrates the sequential process of storing screen system information. Initially, information of a full screen image 40 is trapped and stored. Thereafter, a series of five updates 42 are trapped and stored.

The present invention has the ability to emulate the replaced dumb terminal for viewing several types of screens. One such screen is a hardware screen for various displays of information that pertain to control and configuration of the hardware for a mainframe computer, such as starting and stopping the system, reconfiguring partitions and monitoring system usage statistics.

The second type of screen system information the present invention emulates is the operating system screen. The prior art console normally required viewing the operator system activity of a mainframe is replaced by the present invention and an emulation is acceptable. Operating system screens are various displays that provide the user with the ability to enter commands to the mainframe, respond to error messages, initiate jobs and tasks, configure software and view information returned from the mainframe.

A third type of screen emulated are application screens which are displayed on a console for a mainframe. Because the application screen is effectively emulated in the present invention, there is no need for a separate terminal. The application screen is fully emulated along with the hardware and operating system screens. Application screens provide interface with various software used for such tasks as editing software programs, running applications and data entry.

The operator at the operator CPU will not only be receiving system information which is displayed on the operator CPU but will also have an additional screen or window. The system information that has been stored in memory is accessible as an additional screen that emulates history for the connection from the host mainframe to the operator CPU. This history is emulated screen by screen. As the console emulation updates itself, refreshed screen information is captured and saved in memory. A history of activity is thereby constructed for that particular connection. The history will, thus, be created screen by screen. The user may access and browse these historical screens by scrolling backward through the history. Once at a selected point, the browser may scroll forward or backward by browsing through the system information stored.

The history window may be overlaid on the existing screen display using conventional technology.

A further feature of the present invention is illustrated in Figure 1. A field engineer will often require wide access to the mainframe computer system in order to resolve problems and reduce down time. By emulating various types of system screens, the present invention makes them accessible to both local operators and to remote users. In Figure 1 the operator's central processing unit 22 is connected via line 30 to a remote central processing unit 32 which includes a display monitor 34 and a keyboard 36. One such remote central processing unit 32 would be a laptop personal computer.

Multiple users can access the emulated screen histories simultaneously, without interference with each other, and browse the individual screens. It is not necessary for the entire history to be downloaded to the remote user. The remote user is provided with a searchable emulation history in reverse order, with the most recent history transmitted first. Since the emulated screen histories are transmitted to the remote user with the most current information first, the remote user is not forced to scroll through screens of information that are not relevant.

As an example, a remote field engineer using a remote operator central processing unit 32 may connect via line 30 to the operator central processing unit 22. In the present embodiment, this would be accomplished through telephone line and modem connection using standard TCP/IP protocol. The remote user might also be connected to the operator through a local area network (LAN) connection via TCP/IP protocol. The remote user would be contacting the operator concerning a problem that has developed. The present system is valuable in allowing the field engineer to ascertain and solve problems.

The remote user, while simultaneously reviewing an emulation of the operator's screen history, can evaluate the situation, make diagnosis and simultaneously talk to the user by telephone (not shown) who may also be viewing the emulated history. The field engineer may, thus, work with the operator step by step through possible corrective measures.

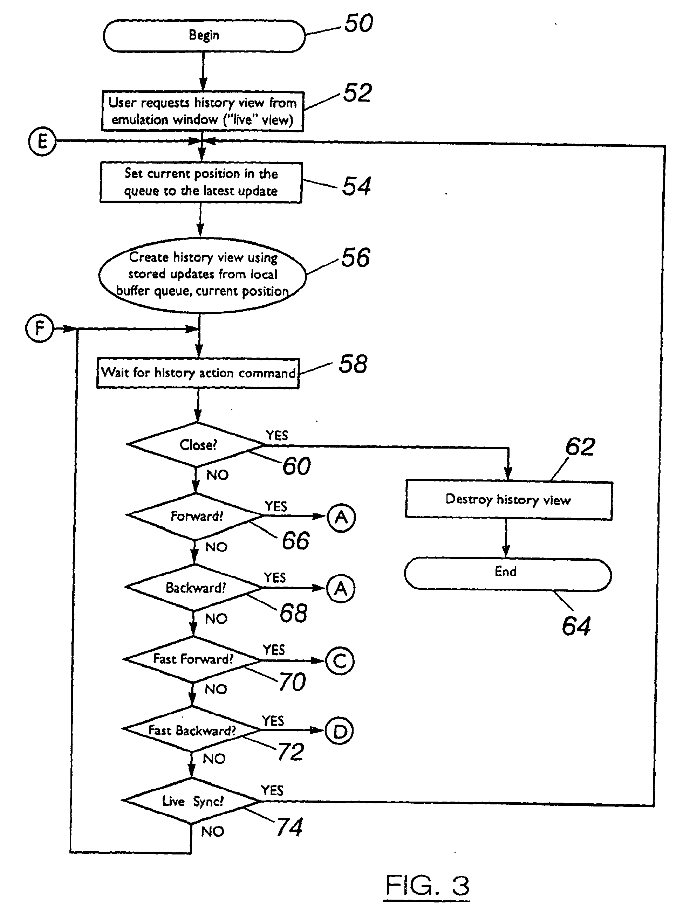

Figures 3 through 8 are flow charts illustrating the sequential process of the invention from either the operator or remote central processing unit vantage point.

As seen in the over view process in Figure 3, once the operation has started, as seen at 50, the user will request a history view from the emulation window, as shown as box 52. Thus, the history pointer into the queue is initiated.

The head pointer is set to a current position in the queue to the latest update, as shown at box 54.

As seen in oval 56, a history view is created using stored updates from the memory or local buffer queue. This process will be explained in detail.

As seen at box 58, the process will wait for a further command. If the system is to be closed, as at diamond 60, the history window will disappear, as at box 62, and the sequence will be terminated, as at 64.

If not closed, there are five possible actions: forward 66; backward 68; fast forward 70; fast backward 72; or live sync 74. In each case, if none of these commands is forthcoming, the system will recirculate as shown at F to wait for a history action command 58.

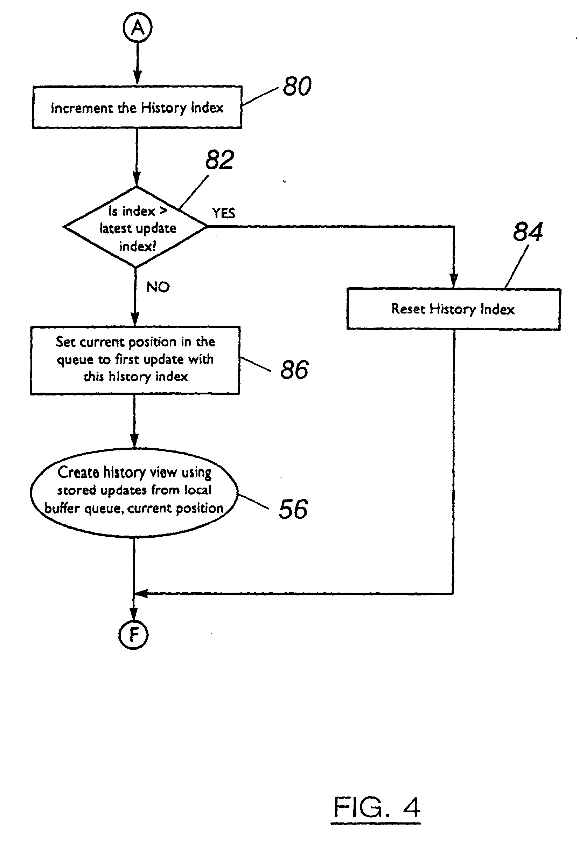

Figures 4, 5, 6 and 7 illustrate in detail the process when each of these actions is initiated.

Figure 4 illustrates the forward action in detail. In Figure 4, once the forward command is initiated, the history pointer is moved forward as at box 80. If the index is greater than the latest update index, as shown at diamond 82, the history index is reset as at 84, so that the system will recirculate to wait for a further history action command.

If not, the current position in the queue is set to the next sequential update as shown in box 86. Thereafter, a history view is created 56.

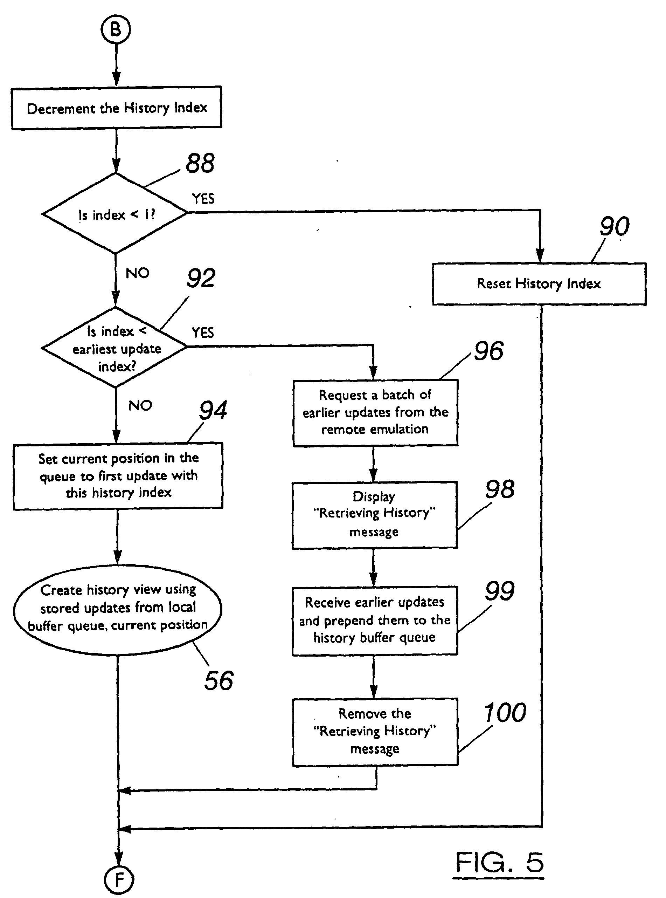

In Figure 5, the process shows in detail the sequence when the backward command is initiated. A similar process is employed. If the index is less than one, as shown at box 88, the history index is reset, as shown at 90. The system then recirculates, as described in Figure 3.

If not, it is determined if the index is less than the earliest update index, as shown at 92. If not, the next sequential update is set in the queue and the history view is created, as at 56. If the index is less than the earliest update index, a batch of earlier updates is requested from the remote emulation, as shown at box 96. A display message "Retrieving History" is displayed, at that 96. Earlier updates are added to the beginning of the queue, as at 99. Finally, the "Retrieving History" message is removed.

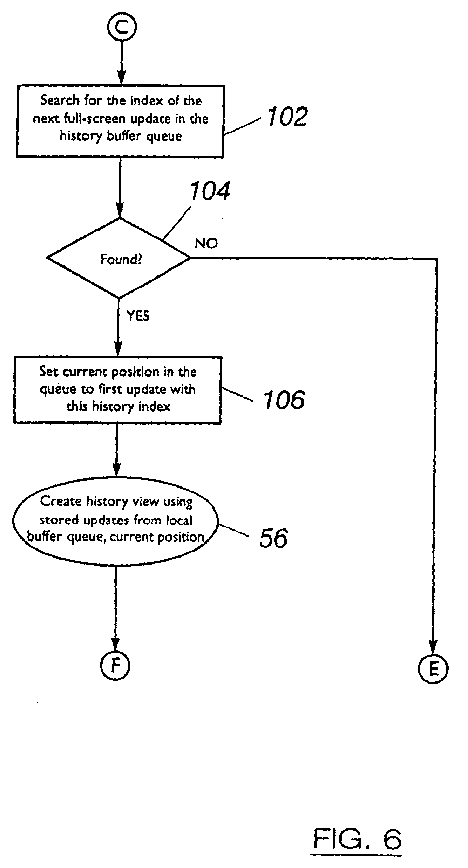

Figure 6 illustrates the fast forward process in detail. The index is searched for the next full screen update, as shown at 102.

If not found, as at diamond 104, the pointer moves back to the live position. If found, the pointer sets the current position in the queue to the first update, as at 106, and a history view is thereafter created 56.

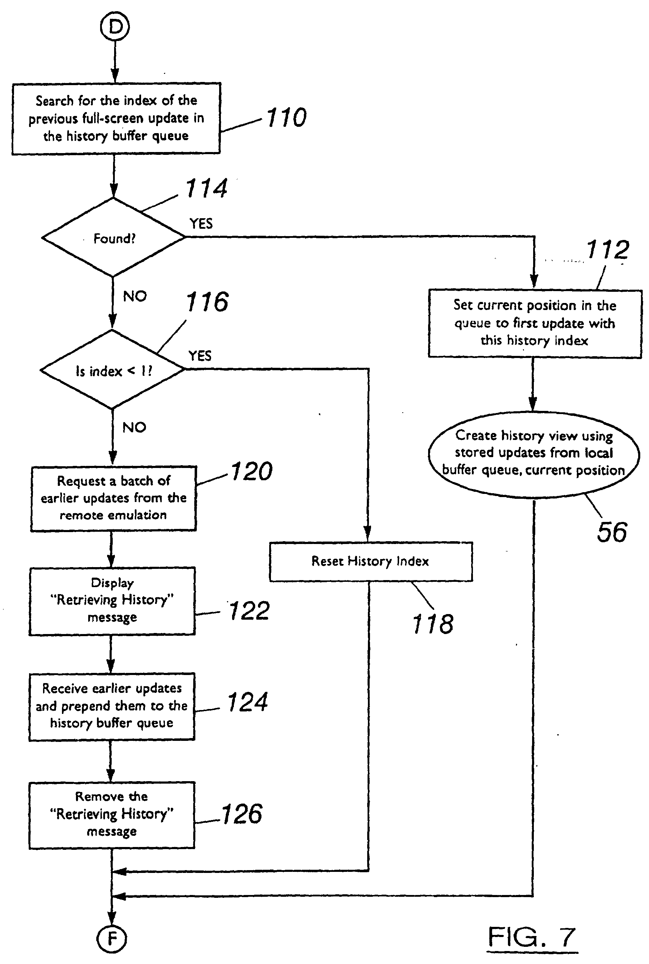

Figure 7 illustrates in detail the process in the fast backward sequence. The index is searched for the previous full screen update in the history bufter queue as shown at 110.

If found, the current position is set in the queue to the first update, as at 112, and a history view is created 56.

If not found, as shown at diamond 114, a check would be made to see whether the index is less than one as at diamond 116. If so, the history index will be reset as at box 118. The system recirculates as described in Figure 3.

If the index is not less than one, a batch of earlier updates will be requested as at box 120. The retrieved history message will be displayed, as at 122. Earlier updates will be received and added to the beginning of the history buffer queue. Finally, the "retrieved history" message will be removed, as shown at box 126. The system will then recirculate as shown.

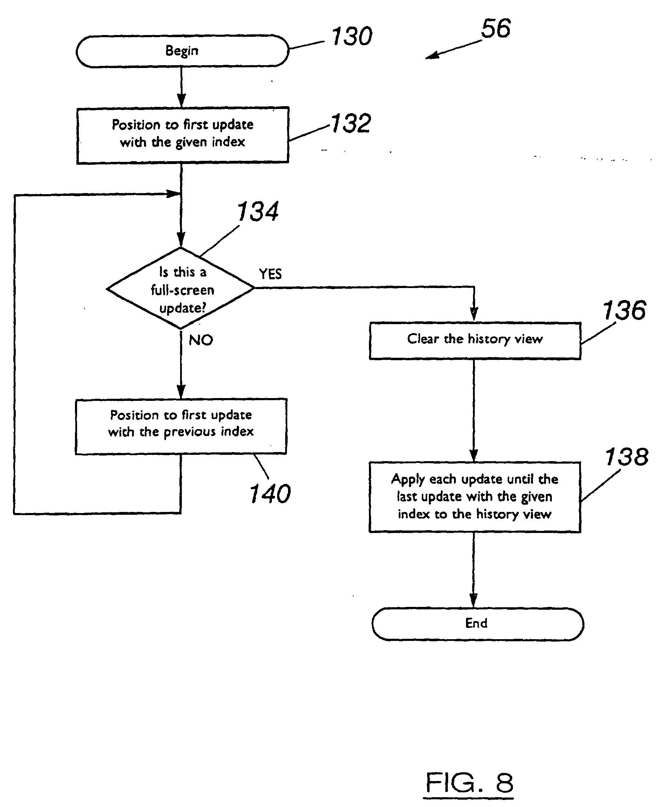

Figure 8 illustrates the process to create a history view 56 which is utilized in the above sequences. After initiation 130, the pointer is positioned to the first update with a given index, as shown at box 132. It will be determined if this is a full screen update, as shown at diamond 134. If so, the history view will be cleared and each update will be applied until the last update with the given index to the history view, as shown at box 138.

If it is not a full screen update, the pointer will be positioned to the first update with the previous index as shown at 140. This will be repeated as often as necessary to move to a full screen update.

## Claims

1. A process to emulate console screen displays from a host central processing unit configured to send host system information, which process comprises:
receiving system information from said host at an operator central processing unit in communication with said host;
emulating said host console screen displays using a computer program in said operator central processing unit; and
trapping and saving all said system information and updates to the screen from said host central processing unit with said operator central processing unit, by;
initially compressing said system information pertaining to a full screen image and storing in a memory;
saving a plurality of system information updates in said memory; and
repeating in sequence the steps above of receiving said system information, initially compressing said full screen images, and saving said system information updates.

2. A process to emulate console screen displays as set forth in Claim 1 wherein said system information and updates to said screen are stored in a memory resident in said operator central processing unit.

3. A process to emulate console screen displays as set forth in Claim 2 wherein said stored system information and updates are browseable and searchable remotely.

4. A process to emulate console screen displays as set forth in Claim 2 including the additional step of displaying both emulated system information to the screen.

5. A process to emulate console screen displays as set forth in Claim 1 including the additional step of communicating from said host to said operator central processing unit via a cable and an adapter card.

6. An emulated screen history system for use with a host central processing unit configured to send host system information, which system comprises:
an operator central processing unit in communication with said host central processing unit via a cable;
a data communications adapter card in communication with said cable and with said operator central processing unit;
a computer program in said operator central processing unit to receive said system information and emulate a host console display and to drive said adapter card; and
a memory in said operator central processing unit to store said system information and a plurality of system information updates to the screen at the time presented to said operator central processing unit.

7. An emulated screen history system as set forth in Claim 6 wherein said system information and updates stored in said memory may be accessed and transmitted in reverse order.

8. An emulated screen history system as set forth in Claim 6 wherein said host central processing unit is an IBM or IBM compatible mainframe and wherein said cable is a coax cable.

9. An emulated screen history system as set forth in Claim 6 wherein said host central processing unit is an AS/400 mini computer and wherein said cable is a twinax cable.

10. An emulated screen history system as set forth in Claim 6 wherein said plurality of system information and updates in said operator memory are remotely accessible.

11. A process to emulate screen displays as set forth in Claim 1 wherein five said system information updates are saved.

12. A process to emulate screen displays as set forth in Claim 1 including the additional step of accessing said system information and updates remotely.

13. A process to emulate screen displays as set forth in Claim 12 including the additional step of transmitting said system information and updates in reverse sequence.

## Patentansprüche

1. Verfahren zum Emulieren von Konsolbildschirmanzeigen von einer Host-Zentraleinheit, die zum Senden von Host-Systeminformationen konfiguriert ist, wobei das Verfahren die folgenden Schritte umfasst:
Empfangen von Systeminformationen von dem genannten Host an einer Operator-Zentraleinheit in Verbindung mit dem genannten Host;
Emulieren der genannten Host-Konsolbildschirmanzeigen mit einem Computerprogramm in der genannten Operator-Zentraleinheit; und
Erfassen und Speichern aller genannten Systeminformationen und Updates zu dem Bildschirm von der genannten Host-Zentraleinheit mit der genannten Operator-Zentraleinheit durch:
anfängliches Komprimieren der genannten, zu einem Vollschirmbild gehörenden Systeminformationen und Speichern in einem Speicher;
Speichern einer Mehrzahl von Systeminformations-Updates in dem genannten Speicher; und
Wiederholen, der Reihe nach, der obigen Schritte zum Empfangen der genannten Systeminformationen, anfängliches Komprimieren der genannten Vollschirmbilder und Speichern der genannten Systeminformations-Updates.

2. Verfahren zum Emulieren von Konsolbildschirmanzeigen nach Anspruch 1, wobei die genannten Systeminformationen und Updates zu dem genannten Bildschirm in einem Speicher in der genannten Operator-Zentraleinheit gespeichert werden.

3. Verfahren zum Emulieren von Konsolbildschirmanzeigen nach Anspruch 2, wobei durch die genannten Systeminformationen und Updates von einer fernen Stelle aus gebrowst und gesucht werden kann.

4. Verfahren zum Emulieren von Konsolbildschirmanzeigen nach Anspruch 2 mit dem zusätzlichen Schritt des Anzeigens beider emulierter Bildschirminformationen zu dem Bildschirm.

5. Verfahren zum Emulieren von Konsolbildschirmanzeigen nach Anspruch 1 mit dem zusätzlichen Schritt des Kommunizierens zwischen dem genannten Host und der genannten Operator-Zentraleinheit über ein Kabel und eine Adapterkarte.

6. Emuliertes Bildschirm-Historiensystem für die Verwendung mit einer Host-Zentraleinheit, die zum Senden von Host-Systeminformationen konfiguriert ist, wobei das System Folgendes umfasst:
eine Operator-Zentraleinheit in Verbindung mit der genannten, Host-Zentraleinheit über ein Kabel;
eine Datenkommunikationsadapterkarte in Verbindung mit dem genannten Kabel und mit der genannten Operator-Zentraleinheit;
ein Computerprogramm in der genannten Operator-Zentraleinheit zum Empfangen der genannten Systeminformationen und zum Emulieren einer Host-Konsolanzeige und zum Ansteuern der genannten Adapterkarte; und
einen Speicher in der genannten Operator-Zentraleinheit zum Speichern der genannten Systeminformationen und einer Mehrzahl von Systeminformations-Updates zu dem Bildschirm zu dem Zeitpunkt, an dem sie der genannten Operator-Zentraleinheit präsentiert wurden.

7. Emuliertes Bildschirm-Historiensystem nach Anspruch 6, wobei auf die genannten, in dem genannten Speicher gespeicherten Systeminformationen und Updates in umgekehrter Reihenfolge zugegriffen wird und diese in umgekehrter Reihenfolge gesendet werden.

8. Emuliertes Bildschirm-Historiensystem nach Anspruch 6, bei dem die genannte Host-Zentraleinheit ein IBM- oder IBM-kompatibler Mainframe ist und wobei das genannte Kabel ein Koaxkabel ist.

9. Emuliertes Bildschirm-Historiensystem nach Anspruch 6, bei dem die Host-Zentraleinheit ein AD/400 Minicomputer ist und wobei das genannte Kabel ein Twinaxkabel ist.

10. Emuliertes Bildschirm-Historiensystem nach Anspruch 6, bei dem auf die genannte Mehrzahl von Systeminformationen und Updates im genannten Operator-Speicher von einem fernen Ort aus zugegriffen werden kann.

11. Verfahren zum Emulieren von Bildschirmanzeigen nach Anspruch 1, bei dem fünf genannte Systeminformations-Updates gespeichert werden.

12. Verfahren zum Emulieren von Bildschirmanzeigen nach Anspruch 1 mit dem zusätzlichen Schritt des Fernzugreifens auf die genannten Systeminformationen und Updates.

13. Verfahren zum Emulieren von Bildschirmanzeigen nach Anspruch 12 mit dem zusätzlichen Schritt des Sendens der genannten Systeminformationen und Updates in umgekehrter Reihenfolge.

## Revendications

1. Processus servant à émuler des affichages d'écran de console à partir d'une unité centrale hôte, qui a été configurée pour envoyer des informations Système hôte, ce processus comprend les étapes suivantes :
recevoir des informations Système à partir dudit hôte, au niveau d'une unité centrale Opérateur qui est en communication avec ledit hôte ;
émuler lesdits affichages d'écran de console hôte en utilisant un programme informatique dans ladite unité centrale Opérateur ; et
capter et sauvegarder toutes lesdites informations Système et mises à jour sur l'écran, à partir de l'unité centrale hôte avec ladite unité centrale Opérateur, grâce à ;
la compression initiale desdites informations Système ayant trait à une image d'écran intégrale et la sauvegarde dans une mémoire ;
la sauvegarde d'une pluralité de mises à jour d'informations Système dans ladite mémoire ; et
la répétition en séquence des étapes ci-dessus consistant à recevoir lesdites informations Système, la compression initiale desdites images d'écran intégrales, et la sauvegarde desdites mises à jour des informations Système.

2. Processus servant à émuler des affichages d'écran de console, selon la revendication 1, dans lequel lesdites informations Système et mises à jour sur ledit écran sont sauvegardées dans une mémoire qui réside dans ladite unité centrale Opérateur.

3. Processus servant à émuler des affichages d'écran de console, selon la revendication 2, dans lequel lesdites informations Système et mises à jour ayant été stockées sont consultables et peuvent faire l'objet d'une recherche à distance.

4. Processus servant à émuler des affichages d'écran de console, selon la revendication 2, comprenant l'étape additionnelle consistant à afficher les deux informations Système émulées sur l'écran.

5. Processus servant à émuler des affichages d'écran de console, selon la revendication 1, comprenant l'étape additionnelle consistant à établir une communication entre ledit hôte et ladite unité centrale Opérateur via un câble et une carte d'adaptateur.

6. Système d'historique d'écran émulé destiné à être utilisé avec une unité centrale hôte qui a été configurée pour envoyer des informations Système hôte, ce système comprend les postes suivants :
une unité centrale Opérateur qui est en communications avec ladite unité centrale hôte via un câble ;
une carte d'adaptateur de communications de données qui est en communications avec ledit câble et avec ladite unité centrale Opérateur ;
un programme informatique dans ladite unité centrale Opérateur servant à recevoir lesdites informations Système et à émuler un affichage de console hôte et à piloter ladite carte d'adaptateur ; et
une mémoire dans ladite unité centrale Opérateur servant à stocker lesdites informations Système et une pluralité de mises à jour d'informations Système sur l'écran présentées à ce moment-là à ladite unité centrale Opérateur.

7. Système d'historique d'écran émulé, selon la revendication 6, dans lequel lesdites informations Système et les mises à jour ayant été stockées dans ladite mémoire peuvent être accessibles, et être transmises en ordre inverse.

8. Système d'historique d'écran émulé, selon la revendication 6, dans lequel ladite unité centrale hôte est un ordinateur central IBM ou compatible IBM, et dans lequel ledit câble est un câble coaxial.

9. Système d'historique d'écran émulé, selon la revendication 6, dans lequel ladite unité centrale hôte est un mini-ordinateur AS/400 et dans lequel ledit câble est un câble twinaxial.

10. Système d'historique d'écran émulé, selon la revendication 6, dans lequel ladite pluralité d'informations Système et de mises à jour dans ladite mémoire Opérateur est accessible à distance.

11. Processus servant à émuler des affichages d'écran, selon la revendication 1, dans lequel lesdites mises à jour d'informations Système, au nombre de cinq, sont sauvegardées.

12. Processus servant à émuler des affichages d'écran, selon la revendication 1, comprenant l'étape additionnelle consistant à accéder à distance auxdites informations Système et mises à jour.

13. Processus servant à émuler des affichages d'écran, selon la revendication 12, comprenant l'étape additionnelle consistant à transmettre lesdites informations Système et mises à jour en séquence inverse.
